# EUROPÄISCHE PATENTANMELDUNG

(11) **EP 3 757 792 A2**
(43) Veröffentlichungstag der Anmeldung: **30.12.2020**
(21) Anmeldenummer: 20177080.7
(22) Anmeldetag: 28.05.2020
(51) Int. Cl.: G06F 11/26, G06F 11/263, G06F 11/36

(54) **VERFAHREN UND VORRICHTUNG ZUM PRÜFEN EINES SYSTEMS, ZUR AUSWAHL REALER TESTS UND ZUM TESTEN VON SYSTEMEN MIT KOMPONENTEN MASCHINELLEN LERNENS**

(30) Priorität: 28.06.2019 DE 102019209538
(71) Anmelder: Robert Bosch GmbH, 70442 Stuttgart (DE)
(72) Erfinder: Heinz, Thomas, 70469 Stuttgart (DE); Gladisch, Christoph, 71272 Renningen (DE); Woehrle, Matthias, 74321 Bietigheim-Bissingen (DE); Heinzemann, Christian, 71640 Ludwigsburg (DE)

(57) **Zusammenfassung**

Verfahren (10) zum Prüfen eines Systems (20),
gekennzeichnet durch folgende Merkmale:
- Eingangsparameter (Z) des Systems (20) werden in eine erste Gruppe (X) und eine zweite Gruppe (Y) eingeteilt (11),
- nach einer ersten Methode wird eine erste Auswahl (21) unter den Eingangsparameterbelegungen der ersten Gruppe (X) getroffen (12),
- nach einer zweiten Methode wird eine zweite Auswahl (22) unter den Eingangsparameterbelegungen der zweiten Gruppe (Y) getroffen (13),
- aus der zweiten Auswahl (22) wird eine Kenngröße (23) berechnet (14) und
- die erste Auswahl (21) wird abhängig von der Kenngröße (23) angepasst (15).

## Beschreibung

Die vorliegende Erfindung betrifft ein Verfahren zum Prüfen eines Systems. Die vorliegende Erfindung betrifft darüber hinaus eine entsprechende Vorrichtung, ein entsprechendes Computerprogramm sowie ein entsprechendes Speichermedium.

### Stand der Technik

In der Softwaretechnik wird die Nutzung von Modellen zur Automatisierung von Testaktivitäten und zur Generierung von Testartefakten im Testprozess unter dem Oberbegriff "modellbasiertes Testen" (*model-based testing,* MBT) zusammengefasst. Hinlänglich bekannt ist beispielsweise die Generierung von Testfällen aus Modellen, die das Sollverhalten des zu testenden Systems beschreiben.

Insbesondere eingebettete Systeme (*embedded systems*) sind auf schlüssige Eingangssignale von Sensoren angewiesen und stimulieren wiederum ihre Umwelt durch Ausgangssignale an unterschiedlichste Aktoren. Im Zuge der Verifikation und vorgelagerter Entwicklungsphasen eines solchen Systems wird daher in einer Regelschleife dessen Modell (*model in the loop,* MiL), Software (*software in the loop,* SiL), Prozessor (*processor in the loop,* PiL) oder gesamte Hardware (*hardware in the loop,* HiL) gemeinsam mit einem Modell der Umgebung simuliert. In der Fahrzeugtechnik werden diesem Prinzip entsprechende Simulatoren zur Prüfung elektronischer Steuergeräte je nach Testphase und -objekt mitunter als Komponenten-, Modul- oder Integrationsprüfstände bezeichnet.

DE10303489A1 offenbart ein derartiges Verfahren zum Testen von Software einer Steuereinheit eines Fahrzeugs, eines Elektrowerkzeugs, oder eines Robotiksystems, bei dem durch ein Testsystem eine von der Steuereinheit steuerbare Regelstrecke wenigstens teilweise simuliert wird, indem Ausgangssignale von der Steuereinheit erzeugt werden und diese Ausgangssignale der Steuereinheit zu ersten Hardware-Bausteinen über eine erste Verbindung übertragen werden und Signale von zweiten Hardware-Bausteinen als Eingangssignale zur Steuereinheit über eine zweite Verbindung übertragen werden, wobei die Ausgangssignale als erste Steuerwerte in der Software bereitgestellt werden und zusätzlich über eine Kommunikationsschnittstelle in Echtzeit bezogen auf die Regelstrecke zum Testsystem übertragen werden.

Derartige Simulationen sind auf verschiedenen Gebieten der Technik verbreitet und finden beispielsweise Einsatz, um eingebettete Systeme in Elektrowerkzeugen, Motorsteuergeräten für Antriebs-, Lenk- und Bremssysteme, Kamerasysteme, Systeme mit Komponenten der Künstlichen Intelligenz und des maschinellen Lernens, Robotiksysteme, oder autonomen Fahrzeugen in frühen Phasen ihrer Entwicklung auf Tauglichkeit zu prüfen. Dennoch werden die Ergebnisse von Simulationsmodellen nach dem Stand der Technik aufgrund fehlenden Vertrauens in ihre Zuverlässigkeit nur begrenzt in Freigabeentscheidungen einbezogen.

### Offenbarung der Erfindung

Die Erfindung stellt ein Verfahren zum Prüfen eines Systems, eine entsprechende Vorrichtung, ein entsprechendes Computerprogramm sowie ein entsprechendes Speichermedium gemäß den unabhängigen Ansprüchen bereit.

Ein Vorzug dieser Lösung liegt in der erfindungsgemäßen Kombination klassischer Tests einerseits, die sich mit dem Verhalten im ungünstigsten Fall (*worst case*) befassen, und statistischer oder probabilistischer Methoden andererseits, die umfassendere Maßstäbe für ein System liefern. Das Verfahren kann genutzt werden, um Tests auszuwählen, die in einer physischen (realen) Umgebung oder nur virtuell (in einer Simulation) durchführen werden. Es kann ferner dazu dienen, nach kritischen Testszenarien (oder anderen Umgebungs- und Eingangsbedingungen) zu suchen und die globale Leistung von autonomen Fahrzeugen zu schätzen, maschinell erlernte Funktionen und Bildverarbeitungsalgorithmen zu testen und Trainingsdaten für maschinelles Lernen und Sehen (*computer vision*) zu erzeugen.

Im Folgenden wird der Begriff Verifikation als Synonym für Testen verwendet und die Begriffe Testen, suchbasiertes Testen und Unsicherheitsquantifizierung werden beschrieben.

Der erfindungsgemäße Ansatz fußt auf der Erkenntnis, dass strenge Tests erforderlich sind, um die Zuverlässigkeit und Sicherheit komplexer Systeme wie beispielsweise autonomer Fahrzeuge zu gewährleisten. Das zu testende System (*system undertest,* SUT) wird unter bestimmten Umgebungsbedingungen und mit verschiedenen Eingaben betrieben. Im Folgenden wird der Begriff "Eingaben" sowohl für die direkten Eingaben des SUTs als auch für Variablen verwendet, die die Umgebungsbedingungen beschreiben, unter denen das SUT betrieben wird. Das SUT kann entweder in einem physischen Aufbau (reale Umgebung) oder in einem Modell des physischen Aufbaus, d. h. im Rahmen einer Simulation, betrieben werden.

Ein Ziel derartiger Prüfungen ist es, nach einer Eingabe oder Umgebungsbedingung, nachfolgend zusammenfassend als "Eingabe" bezeichnet, des SUT zu suchen, bei dem letzteres seine Anforderungen hinsichtlich eines gewünschten Verhaltens nicht erfüllt, oder bei dem seine Leistung schlecht oder geringstmöglich ist. Wenn die Prüfung keine solchen kritischen Eingaben oder Umgebungsbedingungen aufzeigt, wird davon ausgegangen, dass das SUT seine Anforderungen in Bezug auf das gewünschte Verhalten erfüllt oder dass seine Leistung im ungünstigsten Fall bekannt ist. Der mögliche - im Sinne von gültige oder zulässige - Eingabebereich und die Umgebungsbedingungen können vor oder nach der Prüfung eingeschränkt werden, und das Endergebnis gilt für alle Eingaben.

Das vorgeschlagene Verfahren entstand ferner vor dem Hintergrund des suchbasierten Testens (*search-based testing,* SBT) als automatischem Testerzeugungsverfahren, bei dem Optimierungstechniken verwendet werden, um die jeweils nächste Testeingabe auszuwählen. Ein vorhandener Optimierungsalgorithmus, z. B. der Bayessche Optimierer, erzeugt hierbei Eingaben für das SUT mit dem Ziel, die Leistung des SUT zu minimieren, die von einem Leistungsüberwacher (*performance monitor*) ausgewertet wird.

Im Gegensatz zu klassischen Tests konzentrieren sich statistisch-probabilistische Methoden wie die Unsicherheitsquantifizierung (*uncertainty quantification,* UQ) nicht nur auf die Leistung des SUT im ungünstigsten Fall, sondern versuchen vielmehr, die Gesamtleistung des SUT unter Berücksichtigung von Zufälligkeit und Unsicherheit der Eingaben einschließlich etwaiger Umgebungsbedingungen zu bewerten. Die Testeingaben des SUT werden auf der Grundlage einer bestimmten Wahrscheinlichkeitsverteilung ermittelt, die entweder explizit - etwa anhand von Mittelwert und Standardabweichung eines Gaußschen Prozesses - oder implizit durch einen bestimmten Umgebungsaufbau und dessen Parametrisierung gegeben sein kann. Die Ausgabe ist eine Wahrscheinlichkeitsverteilung in Gestalt eines Histogramms, die die Leistung des SUT zusammenfasst. Die Wahrscheinlichkeit ist hierbei nur gültig, wenn die explizite oder implizite Eingabestichprobenverteilung richtig gewählt wurde. Durch die Festlegung eines Schwellenwerts für die Leistung - und damit die Definition einer Anforderung - kann UQ die Wahrscheinlichkeit angeben, mit der das SUT seine Anforderung erfüllt.

Eine erste Herausforderung liegt darin, dass das Testen von Systemen in einer physischen (realen) Umgebung aufwendig ist. Strenge Tests in einer physischen Umgebung können aus Zeit- oder Sicherheitsgründen sogar unmöglich sein. Daher kommen Methoden zum Testen von Systemen in einer simulierten (virtuellen) Umgebung in Betracht.

Der erfindungsgemäße Ansatz erkennt vor diesem Hintergrund die Unmöglichkeit, auf alle physischen Tests zu verzichten. Zu gegebener Zeit muss die Simulationsumgebung selbst validiert, kalibriert und die Unterschiede und Unstimmigkeiten zwischen physischer und virtueller Umgebung gemessen und im Gesamtansatz berücksichtigt werden. Der Ansatz erleichtert die Auswahl oder Priorisierung von derlei Tests, die in einer realen Umgebung durchgeführt werden sollen, in Anbetracht des Einflusses von Unsicherheiten bezüglich der Modellparameter. Die Auswahl dieser in einer realen Umgebung zu wiederholenden Tests wird erfindungsgemäß ausschließlich durch Simulationen getroffen.

Bekannte Techniken zur Auswahl der realen Testfälle bedienen sich entweder einer vordefinierten Stichprobenstrategie oder berechnen Messunsicherheiten. Der beschriebene Ansatz wählt Testfälle hingegen basierend auf dem Verhalten des Simulationsmodells bei gegebenen Unsicherheiten bezüglich der Modellparameter aus.

Der Ansatz löst auch ein weiteres Problem, das nicht direkt mit der im Folgenden beschriebenen Unterscheidung zwischen realen und virtuellen Tests zusammenhängt: Im maschinellen Lernen stellt die Existenz sogenannter gegensätzlicher Beispiele (*adversarial examples*) eine zweite Herausforderung dar. Ein gegensätzliches Beispiel ist eine geringfügige Variation einer Eingabe, die zu einer unerwünschten Ausgabe führt. Bei zwei Bildern eines Autos, die sich in einigen Pixelwerten nur geringfügig unterscheiden und für den Menschen übereinzustimmen scheinen, klassifiziert ein neuronales Netz beispielsweise eines der Bilder als Auto und das andere als ein anderweitiges Objekt.

Aktuelle maschinelle Lernalgorithmen sind anfällig für gegensätzliche Beispiele und es sind effektive Methoden zu deren Erzeugung bekannt. Ein einschlägiger Generator (*adversarial example generator,* AEG) erzeugt zu einer Eingabe *A,* für die ein gegebenes neuronales Netz die richtige Ausgabe erzeugt, eine Eingabe A', bei der dasselbe Netz eine falsche Ausgabe erzeugt. Bei der klassischen Prüfung, deren Ziel es ist, Fehler zu finden, löst ein AEG somit das Prüfproblem, für eine Testeingabe *A* eine "erfolgreiche Prüfung" im Sinne einer Eingabe *A*' zu finden, die ebenfalls gültig ist, bei der das SUT jedoch versagt. Herkömmlicherweise könnte man somit zu dem Schluss gelangen, dass das SUT seine Anforderung nicht erfüllt und korrigiert werden muss oder gar, dass maschinelles Lernen grundsätzlich nicht funktioniert, wenn Fehler nicht hinnehmbar sind.

Der erfindungsgemäße Ansatz erkennt, dass diese Sicht des klassischen Testens für Anwendungen, die auf maschinellem Lernen basieren, zu streng ist, da die Wahrscheinlichkeit, auf einen Fehler zu stoßen, sehr gering oder unbedeutend sein kann, selbst wenn ein solcher nach einer AEG-Methode konstruiert werden mag. Probabilistisch-statistische Methoden hingegen berechnen ein "Durchschnittsfallverhalten", das für sicherheitskritische Anwendungen nicht ausreicht.

Der beschriebene Ansatz kombiniert Analysen des ungünstigsten und durchschnittlichen Falles (*average case*)*,* um vor diesem Hintergrund einen geeigneten Kompromiss zu erzielen und die meisten kritischen Testszenarien oder Testfälle zu finden. Ein Testszenario in diesem Sinne stellt einen - mitunter äußerst umfangreichen - Testraum dar.

Dieser Testraum wächst exponentiell mit der Anzahl der Eingangsparameter des SUT und dessen Umgebung. Eine dritte Herausforderung besteht im Testen oder Analysieren von Systemen mit derart vielen Eingaben.

Durch die in den abhängigen Ansprüchen aufgeführten Maßnahmen sind vorteilhafte Weiterbildungen und Verbesserungen des im unabhängigen Anspruch angegebenen Grundgedankens möglich.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 das Flussdiagramm eines Verfahrens gemäß einer ersten Ausführungsform.
Figur 2 schematisch den erfindungsgemäßen Ansatz.
Figur 3 eine Arbeitsstation gemäß einer zweiten Ausführungsform.

### Ausführungsformen der Erfindung

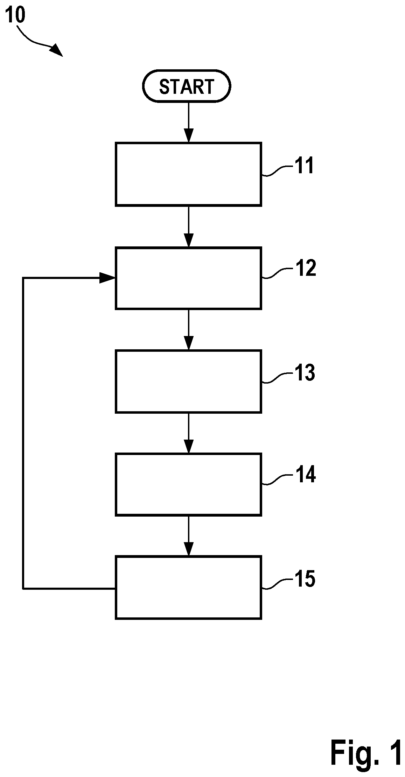

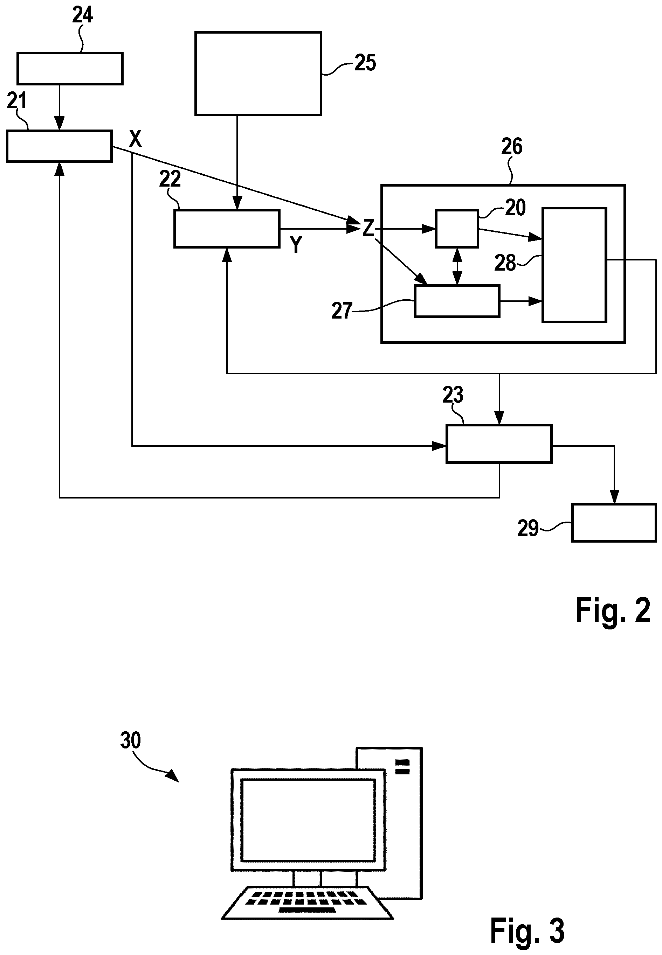

Figur 1 illustriert ein erfindungsgemäßes Verfahren (10), das nunmehr anhand des Blockdiagramms der Figur 2 erläutert sei. Das Verfahren sieht vor, den Satz der Eingangsparameter Z des SUT (Bezugszeichen 20 - Figur 2) und dessen Umgebung (Bezugszeichen 27 - Figur 2) in zwei Gruppen X und Y von Parametern aufzuteilen (Prozess 11 - Figur 1) und letztere dann nach zwei Methoden *A* und *B* zu untersuchen. Methode *A* ist eine auf den ungünstigsten Fall konzentrierte Testmethode, die eine Stichprobe (Bezugszeichen 21 - Figur 2) über die Werte von X bildet (Prozess 12 - Figur 1), und Methode *B ist* eine probabilistische Methode, die eine Stichprobe (Bezugszeichen 22 - Figur 2) über die Werte von Y bildet (Prozess 13 - Figur 1). Aus dieser Auswahl (22) wird eine statistische Kenngröße (Bezugszeichen 23 - Figur 2) berechnet (Prozess 14 - Figur 1), die wiederum verwendet wird, um die Wahl von X zu beeinflussen (Prozess 15 - Figur 1). Die probabilistische Methode B berechnet somit im Ergebnis eine mathematische Projektion von Z auf X, die von der Methode *A* verwendet wird.

Ein Experte teilt hierzu die Parameter Z in die besagten zwei Gruppen X und Y von Parametern ein, wobei *X* ∪ *Y* = *Z*. Typischerweise, aber nicht zwangsläufig, ist die Anzahl der Parameter *X* kleiner als *Y*, d. h. |*X*| < |*Y*|. Die Parameter X unterliegen Randbedingungen (Bezugszeichen 24 - Figur 2) und die Parameter Y unterliegen Beschränkungen (Bezugszeichen 25 - Figur 2), die ihrerseits harte Randbedingungen oder eine Verteilung beinhalten können, welche explizit als Wahrscheinlichkeitsverteilungsfunktion (*probability distribution function,* PDF) oder implizit über ein Stichprobenverfahren (z. B. Umgebungsbedingungen) vorgegeben werden mögen.

Das Verfahren lässt sich durch den folgenden Algorithmus zusammenfassen:

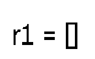

Solange nicht A_TestEndeX(r1):
x = A_GenTestX(r1, XRandbedingungen)

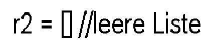

Solange nicht B_TestEndeY(r2):
y = B_GenStichprobeY(r2, YBeschränkungen)
r2 = r2. anhängen(VollständigesSUT(x,y))))
r1 = Statistik(r2, x)
endergebnis = sortieren(r1)

Ein Anwärter für die Methode A (A_TestEndeX, A_GenTestX) ist das oben erwähnte suchbasierte Testen. Ein Anwärter für B (B_TestEndeY, B_GenStichprobeY) ist die ebenfalls oben beschriebene Unsicherheitsquantifizierung.

Die Funktion "VollständigesSUT" (Bezugszeichen 26 - Figur 2) stellt das SUT (20) zusammen mit dessen virtueller Umgebung (27), möglichen Störungsmodellen und einer Bewertungsfunktion (28) seines Verhaltens oder seiner Ausgaben - z. B. in Form eines Leistungsüberwachers, eines Testorakels oder einfach eines Ausgangssignalwählers - dar. Mit Ausnahme des SUT (20) selbst sind die Unterkomponenten (27, 28) dieser Simulation (26) jedoch optional.

Die Funktion "Statistik" (Bezugszeichen 23 - Figur 2) ist eine Zusammenfassung der Ergebnisse r2 für ein festes x und ein veränderliches y; dies ist als Projektion von y auf das aktuelle x zu verstehen. Beispiele für eine geeignete Kenngröße (23) sind Minimum, Durchschnitt, Erwartungswert, Standardabweichung, Differenz von Maximum und Minimum oder Ausfallwahrscheinlichkeit. Die Variable r1 stellt eine Liste oder anderweitige Datenstruktur von Tupeln dar, die jeden Wert x mit dem entsprechenden statistischen Ergebnis verknüpft.

Die Funktionen "A_TestEndeX" und "B_TestEndeY" können etwa gemäß folgendem Pseudokode definiert sein: "|r1| < MaxSamplesA" und "|r2| < MaxSamplesB". Auch kompliziertere Verfahren (z. B. abdeckungsbasierte Verfahren) sind möglich.

Die statistischen Auswertungen (23) mit den zugehörigen Parameterbelegungen X werden in einer Funktion (Bezugszeichen 29) zusammengefasst und dem Benutzer als Ergebnis dargestellt. Ausprägungen dieser Funktion sind z.B. eine Sortierung, eine Auswahl, oder Visualisierung der Testfälle anhand der berechneten Statistiken.

Das Endergebnis ist eine sortierte Liste der statistischen Ergebnisse, die eine Priorisierung der Testszenarien über *X* definiert.

Der Algorithmus sucht effektiv nach einer Zuordnung von X, bei welcher Variationen von Y den ungünstigsten statistischen Wert ergeben oder bei der die statistische Empfindlichkeit des Modells am größten ist. Da X im vollständigen Testraum *Z* enthalten ist, kann es als Testszenario mit veränderlichen Parametern *Y* verstanden werden.

Im Hinblick auf die erste der oben umrissenen Herausforderungen sind die Parameter *X* typischerweise Eingaben, die im realen Test problemlos gesteuert werden können, also gewissermaßen "freie" Parameter wie der Lenkeinschlag oder die Beschleunigung eines Autos. Die Parameter *Y* indes sind typischerweise schwer zu steuern - man denke an die Reibung der Räder, die Temperatur des Motors oder die Windverhältnisse -, jedoch wird davon ausgegangen, dass auch diese im Simulationsmodell (26) berücksichtigt sind. Die Ausgabe des Algorithmus ist eine Priorisierung von Testszenarien für die reale Umgebung, die angesichts der verwendeten Statistiken als vermutlich am kritischsten anzusehen sind.

Im Hinblick auf die zweite Herausforderung betrachte man den Anwendungsfall maschinellen Sehens am Beispiel des automatisierten Fahrens. Die Eingabe eines einschlägigen Algorithmus ist typischerweise ein Bild und seine Ausgabe entspricht einer Klassierung der in diesem Bild sichtbaren Objekte. Hier betrachte man ferner den Fall, dass die Eingabe in den Algorithmus aus einer Umgebung (27) stammt, die entweder mit Hilfe von dreidimensionalen Computergrafiken simuliert oder mit einer Kamera in der Realität aufgezeichnet werden kann.

Der Benutzer wählt in diesem Fall die Parameter X, die das Szenario beschreiben, z. B. anhand von Straßenkonstellation, Objekten im Bild oder Tageszeit. Der Benutzer wählt ferner die Parameter Y, die in jedem Szenario variiert werden können, z. B. Kameraposition und -ausrichtung, intrinsische Kameraparameter sowie Position und Ausrichtung von Objekten in der Szene. Die Variationen der Parameter *Y* können hierbei als Berechnung der Wahrscheinlichkeit für das Auftreten gegensätzlicher Beispiele in einem Szenario betrachtet werden.

Der erfindungsgemäße Algorithmus liefert die Szenarien, die für Variationen in *Y* am kritischsten sind. Auf diese Weise kann die Sicherheit verschiedener Betriebsbereiche eines autonomen Fahrzeugs bestimmt bzw. bewertet werden.

Im Hinblick auf die dritte Herausforderung sind Testprobleme mit vielen - beispielsweise 50 - Parametern wegen des Problems der sogenannten Zustandsraumexplosion schwierig. Der beschriebene Ansatz hilft, dieses Problem zu lösen, indem *Z* so aufgeteilt wird, dass |*X*| << |*Y*|, z. B. |*X*| = 5 und |*Y*| = 45. Der Benutzer wählt die wichtigsten Parameter als *X* und weniger wichtige Parameter *Y.* Dieser Ansatz ermöglicht es, die Parameter *X* und *Y* nach zwei verschiedenen Stichprobenverfahren zu behandeln und projiziert die Ergebnisse der *Y*-Variation auf den *X*-Raum. Auf diese Weise wird eine grobe Analyse des *Y*-Raumes und eine detaillierte Analyse des *X*-Raumes durchgeführt.

Dieses Verfahren (10) kann beispielsweise in Software oder Hardware oder in einer Mischform aus Software und Hardware beispielsweise in einer Arbeitsstation (30) implementiert sein, wie die schematische Darstellung der Figur 3 verdeutlicht.

## Patentansprüche

1. Verfahren (10) zum Prüfen eines Systems (20), insbesondere eines in einen zumindest teilautonomen Roboter oder Fahrzeug eingebetteten Systems,
**gekennzeichnet durch** folgende Merkmale:
- Eingangsparameter (Z) des Systems (20) werden in eine erste Gruppe (X) und eine zweite Gruppe (Y) eingeteilt (11),
- nach einer ersten Methode wird eine erste Auswahl (21) unter den Eingangsparameterbelegungen der ersten Gruppe (X) getroffen (12),
- nach einer zweiten Methode wird eine zweite Auswahl (22) unter den Eingangsparameterbelegungen der zweiten Gruppe (Y) getroffen (13),
- aus der zweiten Auswahl (22) wird eine Kenngröße (23) berechnet (14) Und
- die erste Auswahl (21) wird abhängig von der Kenngröße (23) angepasst (15).

2. Verfahren (10) nach Anspruch 1,
**gekennzeichnet durch** mindestens eines der folgenden Merkmale:
- die Eingangsparameter der ersten Gruppe (X) unterliegen Randbedingungen (24) und
- die Eingangsparameter der zweiten Gruppe (Y) unterliegen Beschränkungen (25).

3. Verfahren (10) nach Anspruch 1 oder 2,
**gekennzeichnet durch** folgendes Merkmal:
- anhand der ersten Auswahl (21) und der zweiten Auswahl (22) wird eine Simulation (26) des Systems (20) durchgeführt.

4. Verfahren (10) nach Anspruch 3,
**gekennzeichnet durch** folgendes Merkmal:
- die Simulation (26) umfasst eine Umgebung (27) des Systems (20).

5. Verfahren (10) nach Anspruch 3 oder 4,
**gekennzeichnet durch** folgendes Merkmal:
- die Simulation (26) liefert eine Leistungsbewertung (28) des Systems (20).

6. Verfahren (10) nach einem der Ansprüche 1 bis 5,
**gekennzeichnet durch** folgendes Merkmal:
- das Einteilen (11) der Eingangsparameter erfolgt manuell.

7. Verfahren (10) nach einem der Ansprüche 1 bis 6,
**gekennzeichnet durch** folgendes Merkmal:
- die erste Gruppe (X) ist kleiner als die zweite Gruppe (Y).

8. Verfahren (10) nach einem der Ansprüche 1 bis 7,
**gekennzeichnet durch** folgendes Merkmal:
- das Verfahren beinhaltet Verifikationsverfahren wie Testen oder worst-caseorientierte Verfahren mit Filterung von statistisch irrelevanten Fehlern wie adversarial examples, welche im Kontext von maschinellem Lernen und Computer Vision vorkommen.

9. Verfahren (10) nach einem der Ansprüche 1 bis 8, **dadurch gekennzeichnet, dass** abhängig von der Prüfung eine automatische Verbesserung von in der Prüfung erkannten Fehlern des Systems erfolgt.

10. Computerprogramm, welches eingerichtet ist, das Verfahren (10) nach einem der Ansprüche 1 bis 7 auszuführen.

11. Maschinenlesbares Speichermedium, auf dem das Computerprogramm nach Anspruch 9 gespeichert ist.

12. Vorrichtung, die eingerichtet ist, das Verfahren (10) nach einem der Ansprüche 1 bis 8 auszuführen.
